# EUROPÄISCHE PATENTANMELDUNG

(11) **EP 0 945 177 A2**
(43) Veröffentlichungstag der Anmeldung: **29.09.1999**
(21) Anmeldenummer: 99105039.4
(22) Anmeldetag: 22.03.1999
(51) Int. Cl.: B01J 23/00, B01J 37/00, B01J 35/04

(54) **Verfahren zur Herstellung von Spinell-Extrudaten**

(30) Priorität: 25.03.1998 DE 19813171
(71) Anmelder: BASF AKTIENGESELLSCHAFT, 67056 Ludwigshafen (DE)
(72) Erfinder: Hesse, Michael Dr, 67549 Worms (DE); Kumberger, Otto Dr, 68163 Mannheim (DE)
(74) Vertreter: Isenbruck, Günter, Dr.

(57) **Zusammenfassung**

In einem Verfahren zur Herstellung von Spinell-Extrudaten durch Extrudieren von Spinellpulver und gegebenenfalls Extrudierhilfsmittel, Stabilisatoren, Schwundminderer, Porenbildner oder deren Gemische enthaltenden Formmassen, anschließendes Trocknen und Calcinieren der Extrudate, enthält die Formmasse zusätzlich Aluminiumoxide oder Aluminiumoxidhydrate und Metallnitrate.

## Beschreibung

Die Erfindung betrifft ein Verfahren zur Herstellung von Spinell-Extrudaten, insbesondere von Extrudaten in Wabenform, die nach Trocknen und Calcinieren als Katalysatoren verwendet werden können.

Bei der Verbrennung von Kohlenwasserstoffen mit Luft als Oxidationsmittel entstehen insbesondere bei einem Luftüberschuß und bei hohen Temperaturen Stickoxide durch Oxidation des in der Luft enthaltenen Stickstoffs. Beispiele solcher Stickoxide sind NO, NO₂, NO₃, N₂O₃, N₂O₄ und N₂O₅. Als Schadstoffe sollen die Stickoxide möglichst vollständig aus den Verbrennungsabgasen entfernt werden, um eine Umweltbelastung zu vermeiden. Während Kraftwerk- und Industrie-emissionen durch den Einsatz von Abgasreinigungsanlagen, stärker zurückgehen, gewinnt die Verminderung des Schadstoffanteils in Kraftfahr-zeugabgasen immer mehr an Bedeutung, vor allem aufgrund der Zunahme der Anzahl an Kraftfahrzeugen.

Zur Verringerung der NOₓ-Emissionen von Kraftfahrzeugmotoren sind viele Lösungen vorgeschlagen worden. Wirksame Lösungen zur Verminderung der NOₓ-Mengen müssen eine Vielzahl von Kriterien erfüllen, beispielsweise insbesondere bei Verwendung von Katalysatoren:
- hoher Umsatz, d.h. weitgehende NOₓ-Entfernung, auch bei hohen und niedrigen Temperaturen, bei häufigem Lastwechsel im Betrieb
- Vermeidung der Verwendung von Hilfsstoffen wie Ammoniak oder Harnstoff
- niedrige Herstellungs- und Betriebskosten
- lange Standzeit
- geringe N₂O-Erzeugung
- hohe mechanische Katalysatorstabilität.

Eine Reihe von Katalysatoren zur Reduktion von Stickoxiden ist bekannt. Dabei geht eine Richtung der Entwicklung geeigneter Katalysatoren zu Spinell-Katalysatoren.

Die Verwendung von mit Kupfer imprägnierten CuAl₂O₄-Spinellen als Abgaskatalysator ist in der DE-A-195 46 482 beschrieben. Die Spinelle werden als Split eingesetzt.

Auch in der EP-A-0 779 093 sind entsprechende Spinellkatalysatoren zur Reduktion von Stickoxiden und zur Oxidation von Kohlenwasserstoffen beschrieben. Die Spinelle basieren auf Zink, Kupfer und Aluminium und werden in Form von Split eingesetzt.

Auch in der EP-A-0 676 232 sind zur Abgasbehandlung einsetzbare Spinellkatalysatoren beschrieben, die den Gehalt an Stickoxiden im Abgas vermindern. Es handelt sich um Zinkaluminiumspinelle, die durch Fällung aus Vorläuferlösungen erhalten werden können. Die Fällungsprodukte können durch Sprühtrocknen oder Flashverdampfung des Lösungsmittels getrocknet werden und fallen als Pulver an. Es ist auch möglich, die Katalysatorvorläufer beispielsweise mit Harnstoff oder Glycin zu vermischen und das Gemisch zu verbrennen, wobei neben der Spinellbildung durch die hohe Temperatur gleichzeitig eine Calcinierung erfolgt. Es ist beschrieben, daß die Katalysatoren in Form von Waben vorliegen können, jedoch ist kein Herstellungsverfahren für die Wabenformkörper angegeben.

Die Spinell-Katalysatoren werden vorzugsweise in Kraftfahzeugen nicht in Form von Split oder Granulat sondern in Form von Wabenkörpern eingesetzt, die aus dem Katalysatormaterial bestehen und eine Anzahl im wesentlichen zueinander parallele Kanäle aufweisen, durch die das zu behandelnde Gas strömt. Derartige Wabenkörper können beispielsweise in der Querschnittsansicht Honigwaben entsprechen. Die einzelnen Kanäle können auch einen runden oder rechteckigen, oder insbesondere quadratischen Querschnitt aufweisen, so daß der Querschnitt durch den Wabenkörper einer rechtwinkligen Gitterstruktur entspricht.

Unterschiedliche Verfahren zur Herstellung von Spinell-Wabenkörper sind vorgeschlagen worden.

In der DE-C-36 19 337 ist ein Verfahren zur Herstellung von TiO₂-SiO₂-Oxidverbindungen, die zudem auch Zirkoniumdioxid enthalten können, beschrieben. Dazu wird eine wäßrige Lösung, die aktive Bestandteile wie Vanadium und Kupfer enthält, oder ein Pulver der aktiven Bestandteile in Form der Oxide zusammen mit einem Verformungshilfsmittel zu einem Titan enthaltenen Oxid, wie TiO₂, TiO₂-SiO₂ und TiO₂-SiO₂-ZrO₂ gegeben. Sodann werden die Bestandteile vermischt und verknetet, während eine geeignete Wassermenge zugegeben wird. Das Gemisch wird dann in einer Extrudierverformungsvorrichtung verformt. Das geformte Produkt wird getrocknet und calciniert.

DE-A-44 19 974 betrifft ein Verfahren zur Herstellung eines geformten Katalysators auf Basis von Titandioxid sowie dessen Verwendung. Der Katalysator kann in Form eines Wabenkörpers vorliegen. Zu seiner Herstellung wird calciniertes Titandioxidhaltiges Pulver im Gemisch mit Wasser, einer Ammoniummetawolframatlösung, Polyethylenglykol als Plastifizierhilfsmittel, Monoethanolamin und Glasfasern geknetet. Diese homogene Knetmasse wird in einem Extruder zu Waben geformt, und die Wabenkatalysatoren werden anschließend getrocknet und calciniert.

US 5,219,816 betrifft Dehydrierungskatalysatoren und Verfahren zu deren Herstellung. Zur Herstellung des auf einem Spinell basierenden Trägermaterials werden Magnesiumnitrat und ein Aluminiumoxid-Material vermischt und in eine geeignete Form extrudiert. Nach dem Trocknen wird bei Temperaturen von 600 bis 700°C calciniert.

Die Herstellung von Wabenkörpern, insbesondere Kupfer-Aluminium-Spinellen, nach den bekannten Verfahren weist eine Reihe von Nachteilen auf:

Die Extrusion der Formmasse zu Wabenkörpern benötigt eine lange Vorschubzeit entsprechend einer geringen Vorschubgeschwindigkeit. Oft werden nur Vorschubgeschwindigkeiten von 5 bis 10 cm/min erreicht.

Die Trocknungszeit der extrudierten Wabenkörper ist sehr lang. Sie beträgt häufig mindestens einen Monat bei Raumtemperatur.

Beim Trocknen und im nachfolgenden Calcinieren bilden sich in der Regel Verformungen, beispielsweise Parallelogrammverformungen und Kissenverformungen, und Längs- sowie Querrisse aus. Auch eine Verlängerung der Trocknungszeit führt zu keinen besseren Ergebnissen.

Derartige Wabenkörper sind aufgrund der Risse und Verformungen mechanisch instabil und führen zu einem ungleichmaßigen Gasfluß durch den Katalysator, so daß die Einstellung konstanter Reaktionsbedingungen am Katalysator schwierig oder unmöglich ist. Zudem werden - beispielsweise in Kraftfahrzeugkatalysatoren - die Wabenkörper in einen Mantel eingepaßt. Beim Vorliegen von Parallelogrammverformungen und Kissenverformungen schließen die Wabenkörper nicht mehr bündig mit dem Mantel ab, so daß Abgas in Art eines Bypass am Katalysator vorbeistreichen kann und die Katalysatorleistung insgesamt stark vermindert wird. Somit weist der Katalysator insgesamt betrachtet in diesem Fall eine verringerte Aktivität auf.

Aufgabe der vorliegenden Erfindung ist die Bereitstellung eines Verfahrens zur Herstellung von Spinell-Extrudaten, insbesondere von Spinell-Wabenkörpern, das die

Nachteile der bekannten Verfahren vermeidet und zu gleichmaßigen nicht verformten Wabenkörpern führt, die keine Risse aufweisen, eine große mechanischen Stabilität und Dauerstandfestigkeit besitzen und gegenüber Temperaturwechseln unempfindlich sind. Sie sollen sich gut in für sie bestimmte Bauteile, beispielsweise Mäntel, einpassen, so daß eine maximale Aktivität bei Betrieb erreicht wird. Zudem soll das Herstellungsverfahren gegenüber den bekannten Verfahren beschleunigt werden.

Die Aufgabe wird erfindungsgemäß gelöst durch ein Verfahren zur Herstellung von Spinell-Extrudaten durch Extrudieren von Spinellpulver und gegebenenfalls Extrudierhilfsmittel, Stabilisatoren, Schwundminderer, Porenbildner, Peptisiermittel oder deren Gemische enthaltenden Formmassen, anschließendes Trocknen und Calcinieren der Extrudate, wobei die Formmasse zusätzlich Aluminiumoxide oder Aluminiumoxidhydrate und Metallnitrate enthält. Bevorzugt sind in wäßriger Lösung sauer reagierende Metallnitrate. Besonders bevorzugt ist Kupfernitrat. Anstelle des bevorzugten Cu(NO₃)₂. 3 H₂O können auch Hydrate mit weniger oder mehreren Molen Kristallwasser eingesetzt werden. Zudem können auch andere Metallnitrate eingesetzt werden, sofern deren Kationen Spinellbildner sind und das Vorliegen der entstehenden Metalloxide im Katalysator erwünscht ist.

Dabei wird die Formmasse vorzugsweise zu Wabenkörpern extrudiert, wie sie eingangs beschrieben sind. Typische Wabenkörper weisen Kanäle mit einem Durchmesser von 1 bis 5 mm und einer Stegdicke von 0,2 bis 5 mm auf.

Das erfindungsgemäße Verfahren ermöglicht die Herstellung von Spinell-Wabenkörpern, die frei von Verformungen und Rissen sind. Die Extrusion der Formmassen zu Wabenkörpern kann mit Vorschubgeschwindigkeiten von bis zu 80 cm/min erfolgen. Die Trocknungszeit bei Raumtemperatur beträgt in der Regel nur etwa eine Woche. Die erhaltenen Wabenkörper sind mechanisch sehr stabil und gegen Temperaturschwankungen sehr stabil.

Erfindungsgemäß können eine Vielzahl von Spinellpulvern eingsetzt werden. Geeignete Spinellpulver sind beispielsweise in EP-A-0 676 232, EP-A-0 779 093, DE-A-195 46 482 sowie in der prioritätsälteren nicht vorveröffentlichten DE-A-196 53 200 beschrieben.

Spinelle sind beispielsweise in C.W. Correns, Einführung in die Mineralogie, Springer Verlag 1949, Seiten 77 bis 80 beschrieben. Weitere Beschreibungen finden sich in H. Remy, Lehrbuch der anorganischen Chemie, Akademische Verlagsgesellschaft Geest & Portig K.-G. Leipzig 1950, Seiten 308 bis 311 sowie Roempp, Chemielexikon, 9. Auflage 1995, Seite 4245. Spinelle leiten sich dabei formal vom MgAl₂O₄ ab. Dabei kann Magnesium durch andere zweiwertige Ionen wie Zink, Kupfer, Eisen ersetzt sein. Aluminium kann durch andere dreiwertige Ionen ersetzt sein, wie Eisen oder Chrom. Im Spinellgitter bilden die Sauerstoffatome eine kubisch-dichteste Kugelpackung entsprechend einem flächenzentrierten Gitter. Die Hälfte der oktaetrischen Lücken darin ist mit Aluminium besetzt, die andere Hälfte der Lücken ist leer. Ein Achtel der tetraetrischen Lücken ist mit Magnesium besetzt.

Vorzugsweise wird als Spinellpulver ein Kupfer-Aluminiumspinellpulver eingesetzt, das zu 0 bis 10 Gew.-% durch ZrO₂, CeO₂, SnO₂, WO₃ MoO₃, TiO₂, V₂O₅, NbIt2 O₃, La₂O₃ oder Gemische davon ersetzt und zusätzlich mit Edelmetallen dotiert sein kann.

Die Spinellpulver weisen vorzugsweise eine mittlere Teilchengröße von 0,1 bis 50 ìm, besonders bevorzugt 1 bis 30 ìm, insbesondere 2 bis 10 ìm auf. Sie können nach unterschiedlichen Verfahren erhalten werden, wie sie beispielhaft in den vorstehenden Druckschriften wiedergegeben sind.

Die Herstellung der Spinellpulver kann beispielsweise durch Mischen der pulverförmigen Oxide der im Spinell enthaltenen Metalle, Verpressen der Oxidgemische und Calcinieren hergestellt werden. Dabei betragt die Temperatur beim Calcinieren vorzugsweise mindestens 700°C. Als geeignete Oxide kommen beispielsweise ZrO₂, SiO₂, Al₂O₃, TiO₂, CeO₂, SnO₂, WO₃, MoO3, Nb₂O₃, La₂O₃ und V₂O₅ in Betracht.

Die Herstellung kann auch durch Mischen mit Metallsalzlösungen der im Spinell enthaltenen Metalle, anschließendes Ausfällen, Trocknen und Calcinieren erfolgen. Anstelle einer Lösung kann auch eine Suspension der Metallsalze eingesetzt werden. Vorzugsweise werden die Salze mit anorganischen Säuren, wie Nitrate, Sulfate, Carbonate oder Halogenide - je nach Löslichkeit - eingesetzt. Es können auch Salze organischer Säuren eingesetzt werden. Beispiele dafür sind Formiate, Acetate, Propionate, Oxalate oder Citrate. Die Fällung kann durch Zugabe von Fällungsmitteln wie Ammoniak, Alkalicarbonat, basisches Alkalicarbonat oder Hydroxide bewirkt werden.

Zudem können die Lösungen durch Sprühtrocknen oder Flash-Verdampfung getrocknet und pulverisiert werden. Nach dem Trocknen kann sich ein Calcinierschritt bei Temperaturen von vorzugsweise mindestens 600°C anschließen.

Weiterhin können die Verbindungen der Vorläufermetalle des Spinells mit einer Kohlenstoff- und Stickstoffquelle vermischt werden, worauf das Gemisch verbrannt wird. Bei der Verbrennung werden hohe Temperaturen gebildet, bei denen die Spinelle entstehen. Als Kohlenstoff- und Stickstoffquelle kommen beispielsweise organische Verbindungen wie Harnstoff oder Glycin in Betracht.

Weitere geeignete Herstellungsverfahren sind beispielsweise in der DE-A-42 24 881 beschrieben. Beispielsweise können Metalloxide wie AlOOH (Böhmit), CuO, ZnO und gegebenenfalls weitere geeignete Metalloxide in Gegenwart eines Bindemittels mit Wasser verknetet, extrudiert, getrocknet und calciniert werden, wobei die erhaltenen Stränge pulverisiert werden können. Anstelle der Metalloxide können die entsprechenden Hydroxide, Oxidhydrate, Carbonate, Salze organischer Säuren, Nitrate, Chloride, Sulfate oder Phosphate, wie vorstehend beschrieben, verwendet werden. Zur Herstellung von bimodalen oder polymodalen Katalysatoren kann man anstelle von AlOOH ein Gemisch aus AlOOH und Al₂O₃, vorzugsweise ã- oder ä-Al₂O₃ verwenden. Dazu kann Al₂O₃ unterschiedlicher Porengrößenverteilungen eingesetzt werden.

Das Trocknen erfolgt vorzugsweise bei einer Temperatur im Bereich von 10 bis 200°C, besonders bevorzugt 20 bis 150°C, insbesondere 30 bis 120°C. Auch eine Gefriertrocknung ist möglich (z.B. -40 bis 0°C, 0,05 bis 0,8 bar). Diese ist besonders schonend, jedoch auch zeitaufwendiger. Die geometrische Form bleibt gut erhalten. Das Calcinieren erfolgt vorzugsweise bei einer Temperatur von 600 bis 900°C.

Bei den bekannten Verfahren wird ein wie vorstehend beschriebenes Spinellpulver oder ein Gemisch der Vorläufersalze zu einem Wabenkörper extrudiert.

Erfindungsgemäß werden dagegen dem Spinellpulver - gegebenenfalls neben Extrudierhilfsmitteln, Stabilisatoren, Schwundminderern, Porenbildnern, Peptisierungshilfsmitteln oder deren Gemischen - zusätzlich Aluminiumoxide oder Aluminiumoxidhydrate und Metallnitrate zugesetzt. Dabei werden vorzugsweise Aluminiumoxidhydrat und z.B. Kupfernitrat in einem Molverhältnis Cu : Al von 0,3 bis 0,7, besonders bevorzugt 0,4 bis 0,6, eingesetzt. Als Aluminiumoxidhydrat werden dabei vorzugsweise Aluminiumoxidhydroxid, Aluminiumtrihydroxid oder Gemische davon eingesetzt. Die Metallsalze können in Form ihrer Hydrate eingesetzt werden. Bevorzugt beträgt die Menge an Aluminiumoxidhydrat und Metallnitrat 15 bis 55 Gew.-%, bezogen auf die Menge des Spinellpulvers. Das Spinellpulver wird dabei mit den zusätzlichen Bestandteilen zu einer plastischen Masse verknetet, die sodann zu Extrudaten, insbesondere Waberkörpern, extrudiert wird. Das Extrudat wird sodann vorzugsweise bei Temperaturen im Bereich von 10 bis 200°C, besonders bevorzugt 20 bis 150, insbesondere 30 bis 120°C getrocknet und bei Temperaturen im Bereich von 500 bis 900°C calciniert. Der Zusatz des Aluminiumoxidhydrats und Metallnitrat erlaubt es, die erfindungsgemäßen verformungs- und rißfreien Wabenkörper zu erhalten. Es ist bislang nicht genau bekannt, worauf dieser Effekt zurückzuführen ist.

Vorzugsweise wird das Mengenverhältnis von Aluminiumoxidhydrat zu Metallnitrat (Kupfernitrat) so gewählt, daß es dem Mengenverhältnis entspricht, das in einem Spinell vorliegt. Bezogen auf das vorliegende Spinellpulver werden vorzugsweise 5 bis 25 Gew.-% AlOOH und 10 bis 30 Gew.-% Metallnitrat (z.B. Cu(NO₃)₂. 3 H₂O) zugesetzt. Das Molverhältnis von Metalloxid zu Al₂O₃ in diesen Spinellvorläufern sollte nicht wesentlich unterstöchiometrisch sein. Vorzugsweise sollte es zwischen 0,6 bis 1,4 betragen.

Anstelle von AlOOH (Böhmit) können auch Al(OH)₃(Bayerit oder Hydrargillit) oder andere Aluminiumoxidhydrate sowie Gemische davon eingesetzt werden. Für eine Beschreibung der geeigneten Vielzahl an Aluminiumoxidhydraten kann auf Holleman-Wiberg, Lehrbuch der anorganischen Chemie, Walter D. Gruyter Berlin, New York 1985 verwiesen werden.

Bevorzugt werden Böhmit und Kupfernitrat mit einem Wassergehalt von 2 bis 6 Mol eingesetzt.

Die Herstellung des eingesetzten Spinellpulvers kann nach unterschiedlichsten Verfahren erfolgen. Beispiele sind
- die Copräzipitation aus Hydroxiden mit nachfolgender Calcinierung,
- das Mischen der Oxide und nachfolgende Calcinierung,
- die Verwendung alter recyclierter Waben,
- die Verwendung von Produktionsrestmengen und -Rückständen,
- das Mischen der Salze, Sprühtrocknen und nachfolgende Calcinieren.

Das Spinellpulver und die daraus erhaltenen Extrudate, insbesondere Wabenkörper, können mit weiteren Oxiden wie ZrO₂, CeO₂, SnO₂, WO₃, MoO₃, TiO₂, V₂O₅, Nb₂O₃, La₂O₃ und/oder Edelmetallen wie Pt, Pd, Ru, Ag, Au dotiert werden. Die Dotierung erfolgt dabei vorzugsweise in Mengen von 0 bis 10 Gew.-%, bezogen auf den calcinierten Wabenkörper.

Die Extrusion der Formmasse zu den Wabenkörpern erfolgt erfindungsgemäß vorzugsweise mit einer Vorschubgeschwindigkeit von bis zu 80 cm/min. Die Trocknungszeit bei Raumtemperatur beträgt erfindungsgemäß vorzugsweise etwa eine Woche.

Die erfindungsgemäßen Wabenkörper können als Katalysator oder Katalysatorträger für die katalytische Reinigung von Stickoxide enthaltenen Abgasen eingesetzt werden. Sie sind damit vor allem für die Entstickung von Verbrennungsabgasen, vorzugsweise Dieselabgasen gedacht. Sie können aber auch für die Entstickung anderer NOₓ-haltiger Abgase beispielsweise aus Kohle, Öl- oder Müllheizkraftwerken verwendet werden. Mit einer geeigneten Dotierung der Wabenkörper ist auch die Reinigung von N₂O-haltigen industriellen Abgasen denkbar. Auch die Dioxinzersetzung ist bei geeigneter Dotierung mit TiO₂, V₂O₅ und WO₃ möglich, wobei die Dioxinzersetzung gleichzeitig oder in unmittelbarem Anschluß mit der/an die Entstickung erfolgen kann. Vorzugsweise kann die Dioxinzersetzung unter oxidierenden Bedingungen an einem TiO₂/V₂O₅/WO₃-Katalysator erfolgen, wie er beispielsweise in EP-A-O 447 537 beschrieben ist. Auch andere polyhalogenierte Verbindungen enthaltende Abgase können gereinigt werden. Besonders bevorzugt werden die Wabenkörper, - insbesondere nach Edelmetalldotierung - als Träger mit Kohlenwasserstoffspeichervermögen für einen 3-Wege-Katalysator eingesetzt.

Die Erfindung wird nachstehend anhand von Beispielen näher erläutert.

### Beispiele

### Beispiel 1

### Ausgangsstoff

Man nimmt 3000 g eines Kupfer-Aluminium-Spinellpulvers, welches bezüglich Cu unterstöchiometrisch ist. Es hat 6 % Glühverlust, so daß die eigentliche Spinellmasse 2820 g beträgt. Das Pulver ist formal aus 20 % = 564 g = 7,09 Mol CuO und 80 % = 2256 g = 22,1 Mol Al₂O₃ zusammengesetzt. Es enthält somit 0,32 Mol CuO pro Mol Al₂O₃, ist also stark unterstöchiometrisch. Das Spinellpulver kann ein entweder originär hergestelltes Spinellpulver oder Rückführgut zum Beispiel aus dem laufenden Prozeß sein. Das originär hergestellte Spinellpulver wurde in Anlehnung an das in EP-A-0 676 232, Beispiel 2, angegebene Verfahren hergestellt, nämlich durch Mischen von Kupfernitrat und AlOOH unter Zugabe von Wasser, Sprühtrocknung auf bekannte Weise und Calcinierung bei 800°C.

### Zumischung von AlOOH + Cu(NO₃)₂. 3 H₂0

3000 g des genannten Spinellpulvers werden mit einer Mischung aus 402,8 g feuchtem Pural®, (mineralogisch Böhmit = AlOOH, enthaltend formal 73,74 % Al₂0₃ = 297,0 g = 2,9 Mol Al₂0₃) und 703 g Kupfernitrat-Trihydrat (= 232 g = 2,9 Mol formal CuO), gemischt. Die Zumischung ist äquimolekular, also entsprechend der Formel CuAl₂O₄ zusamengesetzt.

### Mischung

Die Mischung aus Spinellpulver und Zumischung enthält formal 796 g = 10,0 Mol CuO und 2553 g = 25,0 Mol Al₂O₃. Das Molverhältnis CuO zu Al₂O₃ ist also 0,4 zu 1.

### Erzeugung der plastischen Masse

3000 g Spinellpulver und 1352 g Zumischung werden 5 Minuten innig gemischt. Dann werden 246,4 g Kohlenstoff-Fasern, 41 g Walocel® (Hydroxymethylcellulose), 41 g Polyethylenoxid und 2000 g vollentsalztes Wasser hinzugefügt, und die Masse wird 6 Stunden geknetet. Dann werden 41 g Monoethanolamin zugegeben, und es wird 7 Stunden weitergeknetet. Während der Knetung werden 350 g verdampftes Wasser nachdosiert. Die C-Fasern haben 3 mm Länge und einen Durchmesser von 5 Mikrometer.

### Wabenkörperherstellung

Die Waben werden in üblichen Extrudern und unter folgenden Bedingungen extrudiert, getrocknet, und calciniert:
- Extrusionsgeschwindigkeit:: 50 cm/min
- Trocknungszeit:: 8 Tage
- Ausssehen der calcinierten Waben:: einwandfrei
- Mechanische Stabilität:: Bersthärte 181 N/cm²
- Stabilität gegen Temperaturwechsel:: sehr gut
- Katalytische Aktivität:: sehr gut, hier als 100%

### Beispiel V2 (Vergleichsbeispiel)

Herstellung in situ aus Kupfernitrat-Trihydrat und Böhmit. 4841 g Cu(NO₃)₂. 3 H₂O, 9482 g AlOOH, 522 g C-Fasern, 128 g Monoethanol-amin, 128 g Milchsäure, 96 g Carboxymethylcellulose und 5020 g Wasser werden analog Beispiel 1 gemischt und verknetet. Daraus werden Waben mit 160 Zellen/sq inch (25 Zellen/cm²) hergestellt.
- Extrusionsgeschwindigkeit:: 10 cm/min
- Trocknungszeit:: 28 Tage
- Bersthärte:: 50 N/cm²
- Katalytische Aktivität:: 80 % der von Beispiel 1
- Aussehen:: viele Längsrisse, starke Verformung
- Stabilität gegen Temperaturwechsel:: Es treten zusätzliche Risse auf.

### Beispiel 3

Analog Beispiel 1, jedoch mit Cordierit, jedoch ohne Preßhilfsmittel und Porenbildner.

Das Spinellpulver und AlOOH sowie Cu(NO₃)₂. 3 H₂O werden wie in Beispiel 1 beschrieben gemischt, mit 12 % Cordierit und 30% Wasser versetzt und zu Waben von 160 Zellen pro sq inch verarbeitet.
- Extrusionsgeschwindigkeit:: 45 cm/Minute
- Trocknungszeit:: 10 Tage
- Bersthärte:: 150 N/cm²
- Katalytische Aktivität:: 95 % der von Beispiel 1
- Aussehen:: Leichte Längsrisse, die Waben sind maßhaltig
- Stabilität gegen Temperaturwechsel:: Gut.

### Beispiel 4

Analog Beispiel 1, jedoch mit Cordierit. Gegenüber Beispiel 3 sind Preßhilfsmittel und Porenbildner anwesend.
Mengen der Einsatzstoffe siehe Tabelle 1.
- Extrusionsgeschwindigkeit:: 50 cm/min
- Trocknungszeit:: 10 Tage
- Bersthärte:: 283 N/cm²
- Katalytische Aktivität:: 100 % der von Beispiel 1
- Aussehen:: einwandfrei
- Stabilität gegen Temperaturwechsel:: gut.

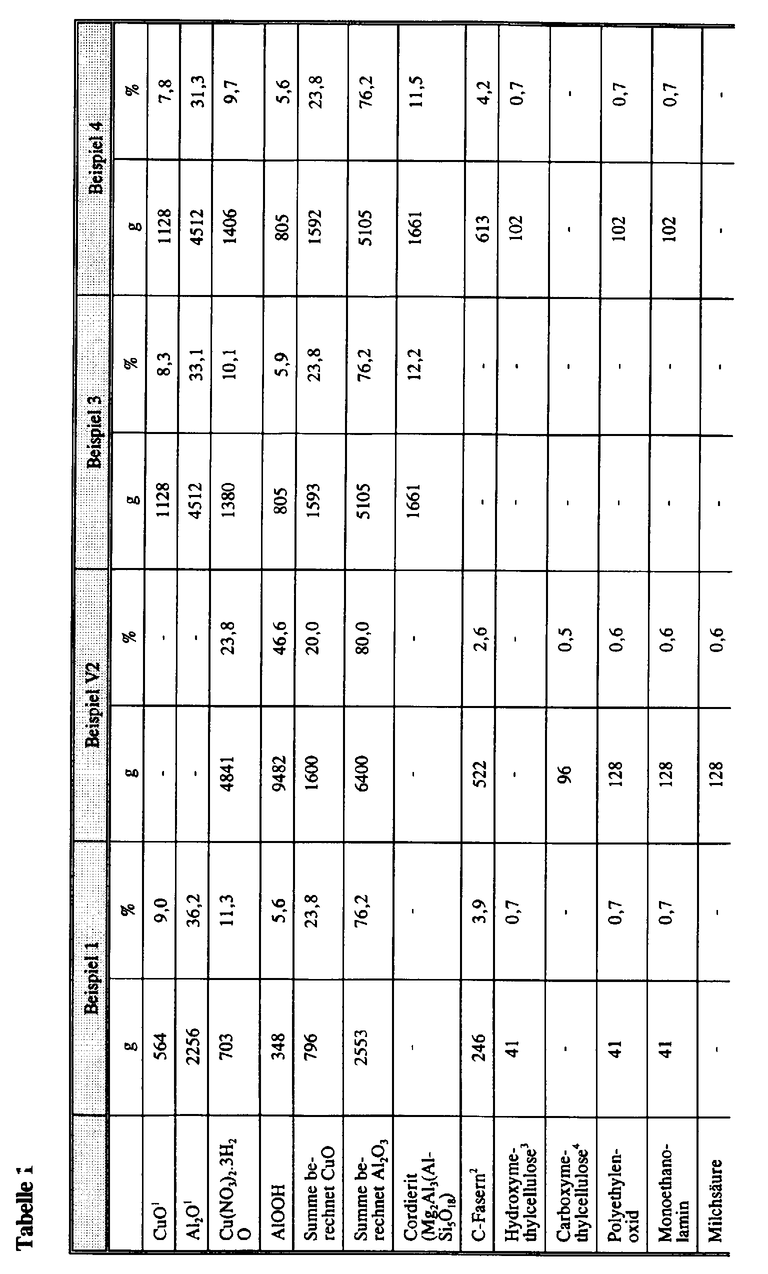

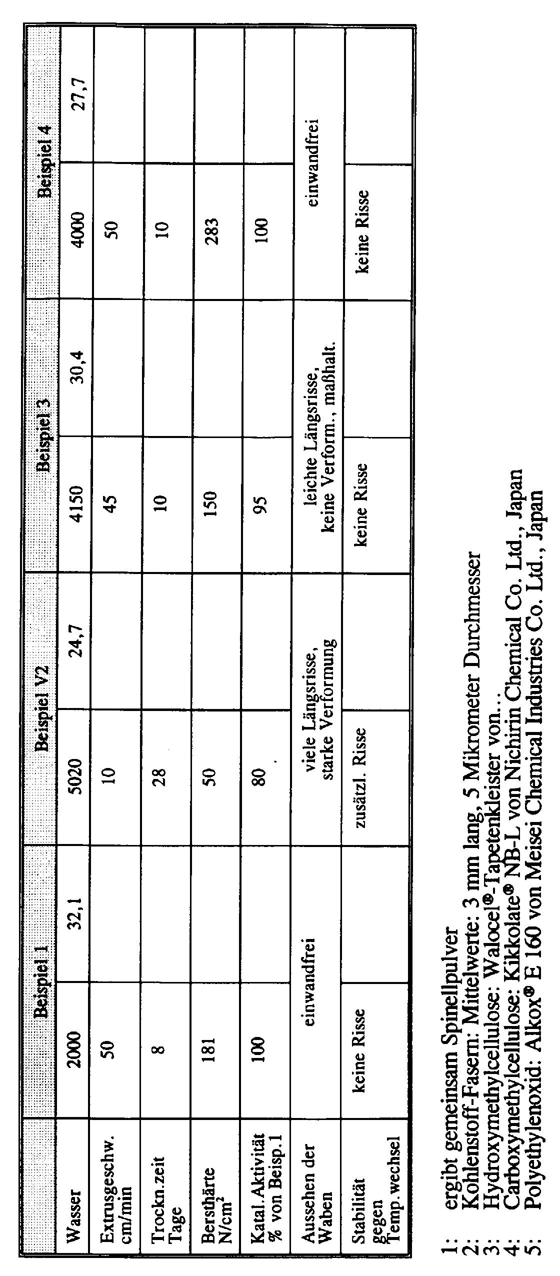

## Patentansprüche

1. Verfahren zur Herstellung von Spinell-Extrudaten durch Extrudieren von Spinellpulver und gegebenenfalls Extrudierhilfsmittel, Stabilisatoren, Schwundminderer, Porenbildner oder deren Gemische enthaltenden Formmassen, anschließendes Trocknen und Calcinieren der Extrudate, dadurch gekennzeichnet, daß die Formmasse zusätzlich Aluminiumoxide oder Aluminiumoxidhydrate und Metallnitrate enthält.

2. Verfahren nach Anspruch 1, dadurch gekennzeichnet, daß die Formmasse zu Wabenkörpern extrudiert wird.

3. Verfahren nach Anspruch 1 oder 2, dadurch gekennzeichnet, daß als Spinellpulver ein Kupfer-Aluminiumspinellpulver eingesetzt wird, das zu 0 bis 10 Gew.-% durch ZrO₂, CeO₂, SnO₂, WO₃, MoO₃, TiO₂, V₂O₅, Nb₂O₃, La₂O₃ oder Gemische davon ersetzt und zusätzlich mit Edelmetallen dotiert sein kann.

4. Verfahren nach einem der Ansprüche 1 bis 3, dadurch gekennzeichnet, daß Aluminiumoxidhydrat und Kupfernitrat in einem Molverhältnis Cu : Al von 0,3 bis 0,7 eingesetzt werden.

5. Verfahren nach einem der Ansprüche 1 bis 4, dadurch gekennzeichnet, daß als Aluminiumoxidhydrat Aluminiumoxidhydroxid, Aluminiumtrihydroxid oder Gemische davon eingesetzt werden.

6. Verfahren nach einem der Ansprüche 1 bis 5, dadurch gekennzeichnet, daß die Menge an Aluminiumoxidhydrat und Kupfernitrat, berechnet als AlOOH und Cu(NO₃)₂ x 3 H₂O, 15 bis 55 Gew.-%, bezogen auf die Menge des Spinellpulvers, beträgt.

7. Verfahren nach Anspruch 6, dadurch gekennzeichnet, daß Böhmit und Kupfernitrat mit einem Wassergehalt von 2 bis 6 Mol eingesetzt werden.

8. Wabenkörper, erhältlich nach einem Verfahren nach einem der Ansprüche 1 bis 7, wobei das Extrudat bei Temperaturen im Bereich von 10 bis 200°C getrocknet oder bei Temperaturen im Bereich von -40 bis 0°C unter einem Druck von 0,05 bis 0,8 bar gefriergetrocknet und bei Temperaturen im Bereich von 500 bis 900°C calciniert wird.

9. Verwendung von Wabenkörpern nach Anspruch 8 als Katalysator oder Katalysatorträger für die katalytische Reinigung von Stickoxide enthaltenen Abgasen, für die katalytische Reinigung von polyhalogenierte organische Verbindungen enthaltenden Abgasen.
